# EUROPÄISCHE PATENTANMELDUNG

(11) **EP 0 718 182 A1**
(43) Veröffentlichungstag der Anmeldung: **26.06.1996**
(21) Anmeldenummer: 95113974.0
(22) Anmeldetag: 06.09.1995
(51) Int. Cl.: B62L 1/00, F16D 55/22

(54) **Scheibenbremse für Fahrräder**

(30) Priorität: 24.12.1994 DE 4446752
(71) Anmelder: FICHTEL & SACHS AG, D-97424 Schweinfurt (DE)
(72) Erfinder: Zirk, Wolfgang, D-97456 Dittelbrunn (DE); Krumbeck, Markus, D-97422 Schweinfurt (DE); Pivit, Rainer, D-97505 Geldersheim (DE)

(57) **Zusammenfassung**

Die Erfindung betrifft eine Scheibenbremse (4) zum Abbremsen einer mit einer Nabe (3) verbundenen Bremsscheibe (7) für Fahrräder, wobei die Scheibenbremse mit einem Ausleger (11) verbunden ist, dessen Ende ein Auge (13) aufweist, das drehbar mit einem Sockel (8) verbunden ist, der mit einem Rahmenteil (1) des Fahrrades verbunden ist. Der Ausleger weist eine Richtung zwischen der Scheibenbremse und dem Sockel auf, die mit der beim Bremsen in Fahrtrichtung erzeugten Bremskraft (B) zusammenfällt uns somit den Ausleger ausschließlich auf Zug belastet. Die Drehfähigkeit um das Auge geschieht auf einer Ebene, die auf einer Mittelebene der Bremsscheibe senkrecht steht und die Scheibenbremse über der Bremsscheibe vermittelt. Von Vorteil ist das Minimum an Befestigungsaufwand und die einfache Demontierbarkeit im Inspektionsfall.

## Beschreibung

Die Erfindung betrifft eine Bremseinrichtung gemäß dem Oberbegriff des Anspruchs 1.

Mit der DE 25 22 625 A1 ist eine Scheibenbremse bekannt geworden, die zur Ableitung der Bremskraft einen Ausleger aufweist, der mit einer Rohrschelle am Rahmend es Fahrrades befestigt ist. die eigentliche Befestigung der Scheibenbremse erfolgt über einen Gehäusefortsatz, der mit dem Rahmen des Fahrrades durch gemeinsames Einspannen mit der Nabenachse verbunden ist. Eine solche Anordnung einer Scheibenbremse über eine mit der Nabe verbundenen Bremsscheibe hat den Vorteil einer mittigen Zuordnung der Scheibenbremse zu der Bremsscheibe. Die Bremskraft erzeugt ein befestigungsbedingtes Drehmoment um die Nabenachse, wodurch der Ausleger auf Biegung und die Rohrschelle auf Zug beansprucht werden. Eine derartige Ausführung einer Scheibenbremsenanordnung kann hinsichtlich Aufwand und Gewicht verbessert werden, wie der vorliegende Erfindungsgegenstand beweist, der einen Ausleger aufweist, welcher lediglich auf Zug beansprucht wird und zusätzlich die Befestigung und die Vermittelung der Scheibenbremse in Bezug auf die Bremsscheibe in sich vereinigt.

Entsprechend ist es die Aufgabe der Erfindung, eine Scheibenbremse für eine Fahrrad zu schaffen, die mit einem Teil des Rahmens zur Ableitung der Bremskräfte über einen Ausleger verbunden ist, welcher ausschließlich auf Zug belastet sein soll, die Momentenfreiheit und die Vermittelung der Bremsscheibe gewährleisten und die Befestigung der Scheibenbremse am Rahmen des Fahrrades übernehmen soll.

Die Lösung ist in den Ansprüchen beschrieben.

Anhand von Zeichnungen wird ein Ausführungsbeispiel einer Scheibenbremse mit einem Ausleger und dessen Befestigung am Rahmen des Fahrrades beschrieben Es zeigen:

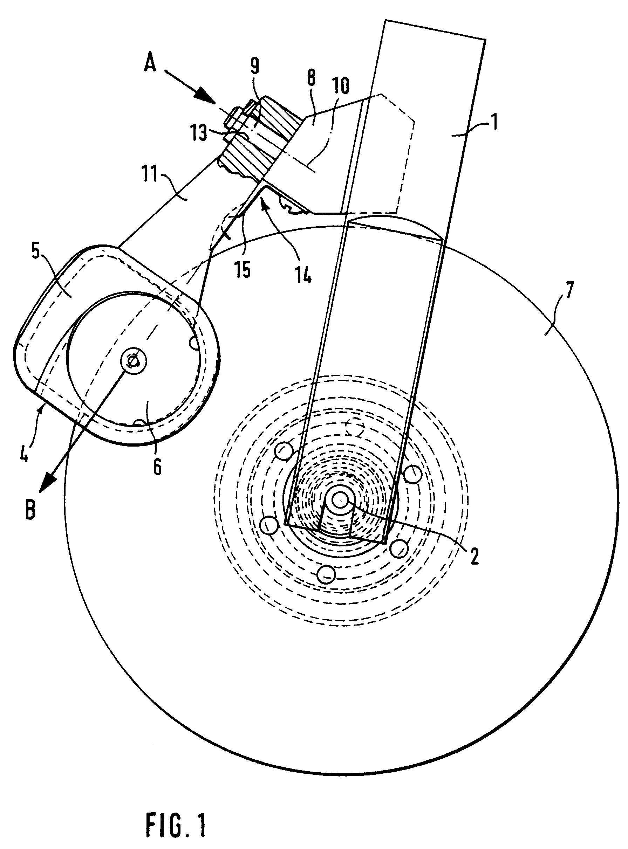

- Fig. 1: eine Scheibenbremse mit einem Ausleger, der an seinem Ende mit einem Befestigungsbolzen auf einem Sockel an einem Gabelholm einer Vorderradgabel eines Fahrrades angeordnet ist, in Seitenansicht;

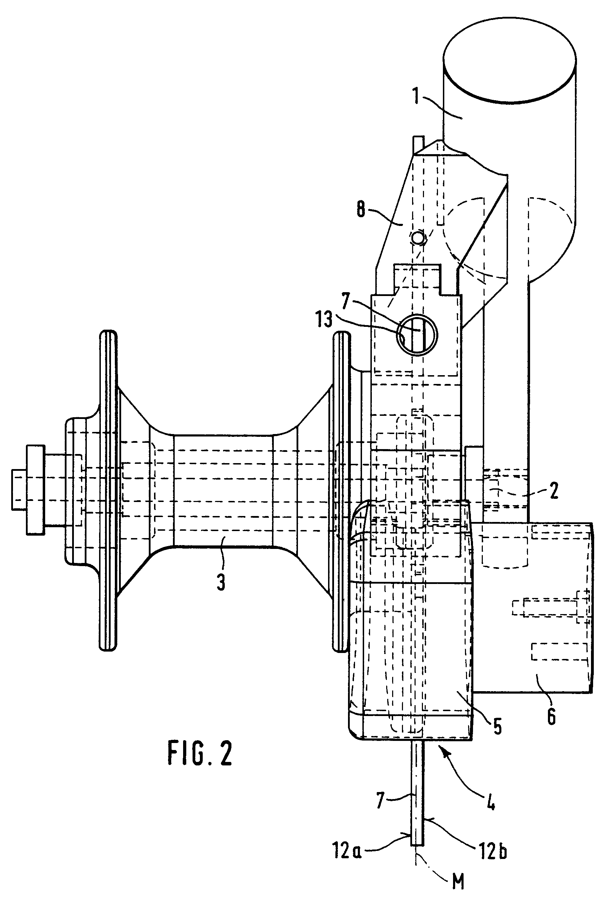

- Fig. 2: die Scheibenbremse mit dem Ausleger und deren Lage zu einer Bremsscheibe an einer Nabe als Ansicht mit Blickrichtung auf den Befestigungsbolzen.

Wird mit 1 ein Gabelholm einer Vorderradgabel eines Fahrrades bezeichnet, so ist dieser mit einer Nabe 3 über eine feststehende Achse 2 verbunden. Mit dem drehenden Teil der Nabe 3 ist eine Bremsscheibe 7 verbunden, die an ihrem radial auswärts angeordneten Randbereich beidseitig je eine Bremsfläche 12a und 12b aufweist, die zwischen zwei Bremsbelägen der Scheibenbremse 4 liegen. Die Scheibenbremse 4 besteht aus einem Gehäuse 5 zur Unterbringung der Bremsbeläge und einem Gehäusefortsatz 6 zur Unterbringung eines Bremszylinders, in welchem ein Kolben durch hydraulischen Druck die Bremsbeläge zum Einklemmen der Bremsscheibe 7 veranlaßt.

Das Gehäuse 5 ist mit einem Ausleger 11 verbunden, der an seinem Ende eine Bohrung 13 aufweist. In diese Bohrung 13 ragt ein Befestigungsbolzen 9, der auf einem Sockel 8 starr angeordnet ist. Der Befestigungsbolzen 9 kann an seinem freien Ende einen Sicherungsring tragen, der verhindert, daß der Ausleger sich ohne Absicht des Fahrradbenutzers von dem Befestigungsbolzen löst. Der Sockel 8 ist mit dem Gabelholm 1 fest verbunden und stabil genug, die beim Bremsen in Fahrtrichtung vom Ausleger 11 an den Gabelholm 1 weitergegebene Bremskraft B aufzufangen, wobei der Befestigungsbolzen 9 senkrecht zu dieser Kraftrichtung angeordnet sein muß, um zu verhindern, daß Kraftkomponenten aus der Bremskraft B am Befestigungsbolzen 9 entweder in der einen noch in der anderen Richtung entlang der Mittelachse des Befestigungsbolzens 9 auftreten. Die Mittelachse ist mit einer Drehachse 10 identisch, um die sich der Ausleger 11 drehen kann. Diese Drehung beschränkt sich aber nur auf das Spiel zwischen den Bremsbelägen der Scheibenbremse 4 und der Bremsflächen 12a, 12b, wobei es sich als vorteilhaft erweist, daß nach erfolgtem Bremsvorgang sich die Scheibenbremse 4 wegen ihrer freien Schwenkbeweglichkeit um die Drehachse 10 wieder vermittelt. Hierbei ist anzumerken, daß der Ausleger 11 eine Drehebene beschreibt, die auf einer Mittelebene M der Bremsscheibe 7 senkrecht steht. Aus Sicht der Bremsbeläge wirkt sich eine Drehung der Scheibenbremse 4 wegen des geringen Spiels zwischen diesen und den Bremsflächen 12a und 12b lediglich als Verschiebung in Richtung Bremsscheibe 7 aus, wodurch Vorrichtungen zur Vermittelung der Scheibenbremse 4 einfach gestaltet sein können.

Von Vorteil hat sich eine Scheibenbremse 4 erwiesen, die sich in ihrer vermittelten Stellung gegenüber der Bremsscheibe 7 halten kann, da in dieser Position beide Bremsbeläge auf Distanz zur Bremsscheibe 7 liegen und daher nicht an dieser anstreifen. Diese vermittelte Position kann durch eine Rastvorrichtung 14 lösbar fixiert werden in der Weise, daß beispielsweise eine angefederte Kugel in eine Vertiefung einfedert und den Ausleger 11 in dieser Position zum Sockel 8 hält. Da die Position sehr genau bestimmt sein muß, ist die Rastvorrichtung 14 einstellbar ausgeführt, zum Beispiel wird der Einsatz mit der Kugel über einen Exzenter verdreht oder aber eine Federzunge 15 wird in der gewünschten Position befestigt.

Der Ausleger ist in etwa senkrecht zu einer gedachten Linie von der Nabenachse 2 zur Mitte des Gehäusefortsatzes 6 angeordnet, so daß er ausschließlich unter Zugbelastung steht, wenn beim Vorwärtsfahren des Fahrrades gebremst wird. Die Bremskraft B verläuft in Bezug auf die Bremsscheibe 7 tangential und gibt auf die Bremsbeläge keine nach radial außen oder innen gerichtete Kraftkomponenten der Bremskraft B ab, wenn die Rechtwinkligkeit der beschriebenen Anordnung zwischen der gedachten Linie zwischen der Nabenachse 2 und der Mitte des Gehäusefortsatzes 6 gewahrt bleibt.

Als weiteres Kriterium für die Freiheit des Auslegers 11 an Kraftkomponenten ist die genaue Einhaltung der Anordnung der Drehachse 10 in der Mittelebene M der Bremsscheibe 7. Das beim Bremsen erzeugte Moment auf den Gabelholm 1 entsteht dann nicht im Ausleger 11, sondern als freie Biegekraft um den Sockel 8 und somit als Drehmoment im Gabelholm 1, was aber auf die Scheibenbremse 4 und ihren Ausleger 11 keine oder nur geringe Rückwirkungen hat.

Beim Bremsen im Falle des Rückwärtsfahrens des Fahrrades kehrt sich die Zugbelastung im Ausleger 11 in eine Druckbelastung um, die von der Scheibenbremse 4 über den Ausleger 11 auf den Befestigungsbolzen ausgeübt, wird. Da in Rückwärtsfahrtrichtung Bremskräfte bei Fahrrädern zumeist als Haltekräfte entstehen, sind diese gering und durch eine stabile Konstruktion der Bremseinrichtung auffangbar.

Als Vorteil für Inspektionsarbeiten mag noch die einfache Demontage gelten, da die Scheibenbremse 4 durch einfaches Lösen des Sicherungsrings auf dem Befestigungsbolzen 9 abgenommen werden kann.

Die Verbindung des Sockels 8 insbesondere mit dem Gabelholm 1 einer Vorderradgabel eines Fahrrades wird im Erstausrüstungsfalle durch einteiliges Gießen oder aber durch Verschweißen hergestellt; für den Nachrüstungsfall kommt aber auch Verschrauben bei Verwendung von Schellen etc. infrage.

## Patentansprüche

1. Bremseinrichtung für Fahrräder, umfassend einen Rahmenteil in der Nähe einer Nabenachse (2) insbesondere einen Gabelholm (1) einer Vorderradgabel, einen daran befestigten Sockel (8) mit einem Befestigungsbolzen (9), eine Scheibenbremse (4) mit einem Gehäuse (5) zur Unterbringung von Bremsbelägen und mit einem Gehäusefortsatz (6) zur Unterbringung eines Bremszylinders, eine Nabe (3) und einer daran befestigten Bremsscheibe (7), dadurch gekennzeichnet, daß die Scheibenbremse (4) einen Ausleger (11) aufweist, der an seinem Ende drehbar mit dem Befestigungsbolzen (9) am Sockel (8) verbunden ist, wobei die Mittelachse des Befestigungsbolzens (9) als Drehachse (10) für den Ausleger (11) der Scheibenbremse (4) zum Zwecke der selbständigen Einstellung und Vermittelung der Scheibenbremse (4) in Bezug auf die Bremsscheibe (7) dient.

2. Bremseinrichtung nach Anspruch 1, dadurch gekennzeichnet, daß die Scheibenbremse (4) in Fahrtrichtung des Fahrrades gesehen vor dem Gabelholm (1) angeordnet ist.

3. Bremseinrichtung nach Anspruch 1, dadurch gekennzeichnet, daß der Befestigungsbolzen (9) in Bezug auf die Bremsscheibe (7) derart angeordnet ist, daß eine Drehachse (10) in etwa mit einer Mittelebene (M) der Bremsscheibe (7) zusammenfällt.

4. Bremseinrichtung nach Anspruch 1, dadurch gekennzeichnet, daß eine beim Bremsen entstehende Bremskraft (B) von der Scheibenbremse (4) zum Sockel (8) im wesentlichen entlang dem Ausleger (11) verläuft, wobei die Neigung des Befestigungsbolzen (9) derart gestaltet ist, daß keine Momente entstehen, die die Scheibenbremse (4) entweder von der Nabenachse (2) weg oder zu dieser hin bewegen wollen.

5. Bremseinrichtung nach Anspruch 1, dadurch gekennzeichnet, daß der Ausleger (11) einteilig mit dem Gehäuse (5) und/oder mit dem Gehäusefortsatz (6) verbunden ist.

6. Bremseinrichtung nach Anspruch 1, dadurch gekennzeichnet, daß der Ausleger (11) gegenüber dem Sockel (8) mittels einer Rastvorrichtung (14) lösbar einrastbar ist, wodurch sich eine bevorzugte Stellung der Scheibenbremse (4) ergibt, bei der die Bremsbeläge mit ihrem Gehäuse (5) gegenüber der Bremsscheibe (7) vermittelt sind.

7. Bremseinrichtung nach Anspruch 1 oder 6, dadurch gekennzeichnet, daß die Rastvorrichtung (14) eine Einstellmöglichkeit für die Mittelstellung der Scheibenbremse (4) zu der Bremsscheibe (7) aufweist.
